# EUROPEAN PATENT APPLICATION

(11) **EP 4 398 564 A1**
(43) Date of publication of application: **10.07.2024**
(21) Application number: 23212550.0
(22) Date of filing: 28.11.2023
(51) Int. Cl.: H04N 7/14

(54) **INFORMATION PROCESSING APPARATUS AND CONTROL METHOD**

(30) Priority: 04.01.2023 JP 2023000132
(71) Applicant: Lenovo (Singapore) Pte. Ltd., New Tech Park 556741 (SG)
(72) Inventor: WADA, Yuji, Yokohama-shi, 220-0012 (JP); KASHIYAMA, Hideki, Yokohama-shi, 220-0012 (JP)
(74) Representative: Openshaw & Co.

(57) **Abstract**

The present invention is to improve the security of an online video conference. An information processing apparatus includes a first processor which processes image data of a captured image captured by an imaging unit, and a second processor which executes a program of a system. The first processor performs detection processing to detect a face image from the captured image in order to detect the presence or absence of a person, first processing to cause the system to make a transition to a standby state when it is detected that the person is no longer present by the detection processing, disablement processing to disable the first processing when the second processor receives display-off prohibition information to prohibit the display of a display unit from being turned off, and second processing to turn off the display of the display unit or reduce the display brightness when it is detected that the person is no longer present by the detection processing while a specific application program is running by the second processor even in a case where the second processor receives the display-off prohibition information.

## Description

### BACKGROUND OF THE INVENTION

### Field of the Invention

The present invention relates to an information processing apparatus and a control method.

### Description of the Related Art

The number of opportunities to conduct online video conferences (for example, Web conferences) through networks has been increasing. For example, technology about a Web conference system for conducting a Web conference by connecting a plurality of terminal devices to a network to transmit and receive audio and video among the terminal devices (for example, Japanese Unexamined Patent Application Publication No. 2020-160538).

### SUMMARY OF THE INVENTION

A user (a conference participant) may step out of a video conference while the video conference is being conducted. However, a video conferencing application to perform the video conferencing function generally makes such a setting as to prohibit turning off a display to the OS not to automatically turn off the display of a display screen due to sleep time control or the like of the OS on each of the terminal devices while the video conference is being conducted. Therefore, when a user has stepped out of the conference, the fact that the video conference is being conducted and the content of the conference may be known to any person(s) other than the user, and this is not desirable for security reasons.

On the other hand, there are techniques to turn off or darken the display, or make a transition to a standby state (standby state or sleep state) by detecting a person using the camera or the like, but since such a setting as to prohibit the video conferencing application from turning off the display is made to the OS as described above, it is difficult to ensure the security even using the above techniques.

The present invention has been made in view of the above circumstances, and it is an object thereof to provide an information processing apparatus and a control method which improves the security of an online video conference.

The present invention has been made to solve the above problem, and an information processing apparatus according to the first aspect of the present invention includes: a memory which temporarily stores image data of a captured image captured by an imaging unit; a first processor which processes the image data stored in the memory; and a second processor which executes a program of a system, wherein the first processor performs detection processing to detect a face image from the captured image captured by the imaging unit based on the image data stored in the memory in order to detect the presence of absence of a person, first processing to cause the system to make a transition to a standby state when it is detected that the person is no longer present based on the detection result by the detection processing, disablement processing to disable the first processing when the second processor receives display-off prohibition information to prohibit the display of a display unit from being turned off, and second processing to turn off the display of the display unit or reduce the display brightness when it is detected that the person is no longer present based on the detection result by the detection processing while a specific application program is running by the second processor even in a case where the second processor receives the display-off prohibition information.

The above information processing apparatus may also be such that the first processor detects the presence or absence of a specific person based on the face image when detecting the presence or absence of the person in the detection processing.

The above information processing apparatus may further be such that, when it is detected that the person is present based on the detection result by the detection processing after the display of the display unit is turned off or the display brightness is reduced in the second processing, the first processor turns on the display of the display unit or returns the display brightness to the display brightness before being reduced.

Further, the above information processing apparatus may be such that, when it is detected that the person is present based on the detection result by the detection processing after the transition of the system to the standby state in the first processing, the first processor boots the system from the standby state.

Further, the above information processing apparatus may be such that the first processor performs the second processing only when the execution of the second processing is allowed by a user.

Further, the above information processing apparatus may be such that when the specific application program is running by the second processor, the first processor will further perform third processing to prohibit audio output from a speaker if it is detected that the person is no longer present based on the detection result by the detection processing.

Further, the above information processing apparatus may be such that, when it is detected that the person is present based on the detection result by the detection processing after the audio output from the speaker is prohibited in the third processing, the first processor allows the audio output from the speaker.

Further, the above information processing apparatus may be such that, when the specific application program is running by the second processor, the first processor will further perform fourth processing to set a function of a microphone to disabled if it is detected that the person is no longer present based on the detection result by the detection processing.

Further, the above information processing apparatus may be such that, when it is detected that the person is present based on the detection result by the detection processing after the function of the microphone is set to disabled in the fourth processing, the first processor sets the function of the microphone to enabled.

Further, the above information processing apparatus may be such that the specific application is an application to conduct an online video conference using an imaging function by the imaging unit, the information processing apparatus further includes a communication unit that transmits a captured image captured by the imaging unit to respective terminals of one or more participants who join the video conference through a network, and when the specific application program is running by the second processor, the first processor will further perform fifth processing to set the transmission of the captured image captured by the imaging unit to stopped if it is detected that the person is no longer present based on the detection result by the detection processing.

Further, the above information processing apparatus may be such that, when it is detected that the person is present based on the detection result by the detection processing after the transmission of the captured image is set to stopped in the fifth processing, the first processor resumes the transmission of the captured image captured by the imaging unit.

Further, the above information processing apparatus may be such that the specific application is an application to conduct an online video conference using an imaging function by the imaging unit, the information processing apparatus further includes a communication unit which transmits a captured image captured by the imaging unit to respective terminals of one or more participants who join the video conference through a network, and when the specific application program is running by the second processor, the first processor will further perform sixth processing to set a preset image to be transmitted instead of the captured image by the imaging unit if it is detected that the person is no longer present based on the detection result by the detection processing.

Further, the above information processing apparatus may be such that, when it is detected that the person is present based on the detection result by the detection processing after the preset image is set to be transmitted instead of the captured image by the imaging unit in the sixth processing, the first processor sets the captured image by the imaging unit to be transmitted.

Further, the above information processing apparatus may be such that the specific application is an application to conduct an online video conference, the information processing apparatus further includes a communication unit which communicates with respective terminals of one or more participants who join the video conference through a network, and when the specific application program is running by the second processor, the first processor will further perform seventh processing to set participating in the video conference to be in a pending state in a function of the specific application if it is detected that the person is no longer present based on the detection result by the detection processing.

Further, the above information processing apparatus may be such that, when it is detected that the person is present based on the detection result by the detection processing after participating in the video conference is set to be in the pending state in the seventh processing, the first processor sets the pending state to be released.

Further, a control method according to the second aspect of the present invention is a control method for an information processing apparatus including: a memory which temporarily stores image data of a captured image captured by an imaging unit; a first processor which processes the image data stored in the memory; and a second processor which executes a program of a system, the control method including: a detection processing step of causing the first processor to detect a face image from the captured image captured by the imaging unit based on the image data stored in the memory in order to detect the presence of absence of a person; a first processing step of causing the system to make a transition to a standby state when it is detected that the person is no longer present based on the detection result by the detection processing step; a disablement processing step of disabling processing by the first processing step when the second processor receives display-off prohibition information to prohibit the display of a display unit from being turned off; and a second processing step of turning off the display of the display unit or reducing the display brightness when it is detected that the person is no longer present based on the detection result by the detection processing step while a specific application program is running by the second processor even in a case where the second processor receives the display-off prohibition information.

The above-described aspects of the present invention can improve the security of an online video conference.

### BRIEF DESCRIPTION OF THE DRAWINGS

FIG. 1 is a schematic configuration diagram illustrating an example of an online conference system according to a first embodiment.
FIG. 2 is a perspective view illustrating the appearance of an information processing apparatus according to the first embodiment.
FIG. 3 is a diagram for describing an outline of HPD processing of the information processing apparatus according to the first embodiment.
FIG. 4 is a diagram illustrating an example of a person detection range of the information processing apparatus according to the first embodiment.
FIG. 5 is a block diagram illustrating an example of the hardware configuration of the information processing apparatus according to the first embodiment.
FIG. 6 is a block diagram illustrating an example of the functional configuration of the information processing apparatus according to the first embodiment.
FIG. 7 is a flowchart illustrating an example of HPD processing in a normal operating state according to the first embodiment.
FIG. 8 is a flowchart illustrating an example of HPD operation control processing when returning according to the first embodiment.
FIG. 9 is a flowchart illustrating an example of HPD display control processing when returning according to the first embodiment.
FIG. 10 is a schematic block diagram illustrating an example of the functional configuration of the information processing apparatus according to a second embodiment.
FIG. 11 is a flowchart illustrating an example of HPD processing in the normal operating state according to the second embodiment.
FIG. 12 is a flowchart illustrating an example of HPD display control processing and HPD audio output control processing when returning according to the second embodiment.
FIG. 13 is a schematic block diagram illustrating an example of the functional configuration of the information processing apparatus according to a third embodiment.
FIG. 14 is a flowchart illustrating an example of HPD processing in the normal operating state according to the third embodiment.
FIG. 15 is a flowchart illustrating an example of HPD display control processing and HPD microphone control processing when returning according to the third embodiment.
FIG. 16 is a schematic block diagram illustrating an example of the functional configuration of the information processing apparatus according to a fourth embodiment.
FIG. 17 is a flowchart illustrating an example of HPD processing in the normal operating state according to the fourth embodiment.
FIG. 18 is a flowchart illustrating an example of HPD display control processing and HPD camera control processing when returning according to the fourth embodiment.
FIG. 19 is a schematic block diagram illustrating an example of the functional configuration of the information processing apparatus according to a fifth embodiment.
FIG. 20 is a flowchart illustrating an example of HPD processing in the normal operating state according to the fifth embodiment.
FIG. 21 is a flowchart illustrating an example of HPD display control processing and HPD pending-state control processing when returning according to the fifth embodiment.

### DETAILED DESCRIPTION OF THE INVENTION

Embodiments of the present invention will be described below with reference to the accompanying drawings.

### <First Embodiment>

First, a first embodiment of the present invention will be described.

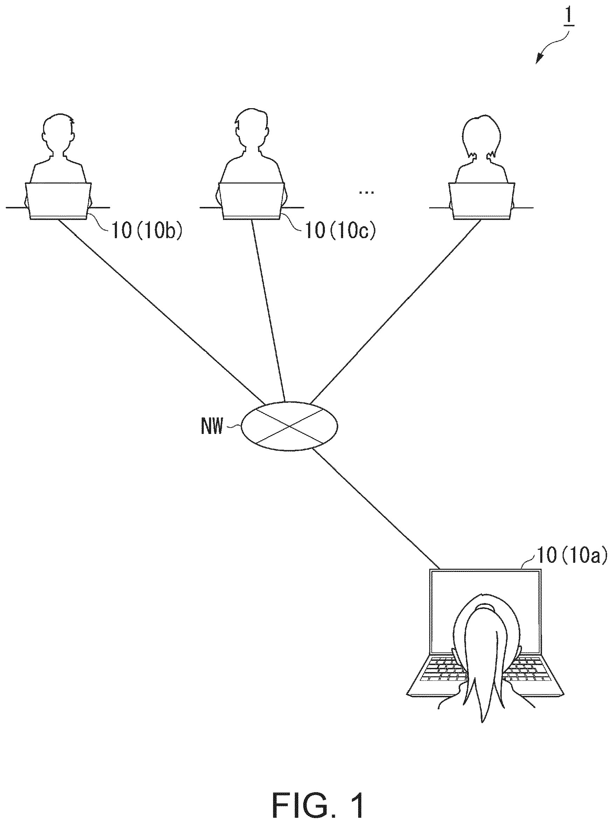

FIG. 1 is a schematic configuration diagram illustrating an example of an online conference system according to the present embodiment. An online conference system 1 illustrated is a system for conducting a Web conference by transmitting and receiving video and audio among a plurality of terminal devices connected through a network NW. Here, as the plurality of terminal devices, information processing apparatuses 10 (10a, 10b, 10c, ...) are illustrated.

The network NW is a communication network composed, for example, of any one or a combination of the Internet, a mobile phone network, a VPN (Virtual Private Network), a dedicated communication network, a WAN (Wide Area Network), a LAN (Local Area Network), and a PSTN (Public Switched Telephone Network).

Each information processing apparatus 10 has a function (a function of the online conference system 1) to conduct a Web conference by bidirectionally transmitting and receiving video and audio to and from one or more other information processing apparatuses 10 through the network NW. For example, the information processing apparatus 10 is a laptop (clamshell) personal computer. The information processing apparatus 10 executes a Web conferencing application program to realize the function of the online conference system. In the following, the Web conferencing application program is called the "Web conferencing app."

Note that the information processing apparatus 10 is not limited to the laptop (clamshell) personal computer, and it may also be a desktop personal computer, a tablettype personal computer, a smartphone, or the like.

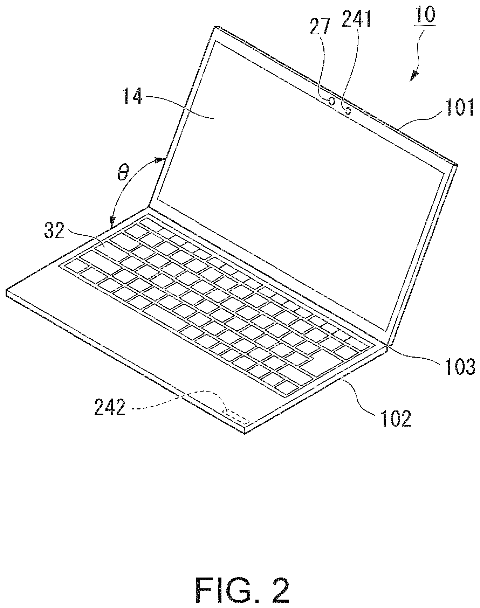

FIG. 2 is a perspective view illustrating the appearance of the information processing apparatus according to the present embodiment. The information processing apparatus 10 illustrated includes a first chassis 101, a second chassis 102, and a hinge mechanism 103. The first chassis 101 and the second chassis 102 are chassis having a substantially rectangular plate shape (for example, a flat plate shape). One of the sides of the first chassis 101 and one of the sides of the second chassis 102 are joined (coupled) through the hinge mechanism 103 in such a manner that the first chassis 101 and the second chassis 102 are rotatable relative to each other around the rotation axis of the hinge mechanism 103. A state where an open angle θ (hinge angle) between the first chassis 101 and the second chassis 102 around the rotation axis is substantially 0° is a state where the first chassis 101 and the second chassis 102 are closed in such a manner as to overlap each other (called a "closed state"). Surfaces of the first chassis 101 and the second chassis 102 on the sides to face each other in the closed state are called "inner surfaces," and surfaces on the other sides of the inner surfaces are called "outer surfaces," respectively. The open angle θ can also be called an angle between the inner surface of the first chassis 101 and the inner surface of the second chassis 102. As opposed to the closed state, a state where the first chassis 101 and the second chassis 102 are open is called an "open state." The open state is a state where the first chassis 101 and the second chassis 102 are rotated relative to each other until the open angle θ exceeds a preset threshold value (for example, 10°). Typically, as illustrated, the information processing apparatus 10 is often used in a state of an open angle θ = 100 to 130°.

A display unit 14 is provided on the inner surface of the first chassis 101. The display unit 14 displays a video based on processing executed by the information processing apparatus 10. Further, a camera 27 (imaging unit) and a microphone 241 are provided in a peripheral area of the display unit 14 on the inner surface of the first chassis 101. In other words, the camera 27 and the microphone 241 are provided in positions facing a user who uses the information processing apparatus 10. Note that the microphone 241 may also be configured to include two microphones for right side and left side.

Further, a keyboard 32 and a speaker 242 are provided on the inner surface of the second chassis 102. The keyboard 32 is provided as an input device to accept user operations. Note that the speaker 242 may also be configured to include two speakers for right side and left side. In the closed state, the display unit 14 is made invisible and operations on the keyboard 32 are disabled. On the other hand, in the open state, the display unit 14 is made visible and operations on the keyboard 32 are enabled (that is, the information processing apparatus 10 is available).

The information processing apparatus 10 can execute various application programs on an OS (Operating System). For example, the information processing apparatus 10 executes a Web conferencing app to transmit a video based on captured images captured by the camera 27 and voice and the like input to the microphone 241 to other information processing apparatuses 10 through the network NW. Further, the information processing apparatus 10 executes the Web conferencing app to display, on the display unit 14, a video transmitted from any other information processing apparatus 10 and output audio transmitted from the other information processing apparatus 10 from the speaker 242.

Further, the information processing apparatus 10 executes person detection processing to detect a person present in a direction to face the display screen of the display unit 14 of the information processing apparatus 10 (hereinafter called "in front of" the information processing apparatus 10). This person detection processing is called HPD (Human Presence Detection) processing. The information processing apparatus 10 detects the presence or absence of a person by the HPD processing to control the operating state of the system of the information processing apparatus 10 based on the detection result. A normal operating state (power-on state) and a standby state are included as the operating states of the system.

The normal operating state is an operating state capable of executing processing without being particularly limited, which corresponds, for example, to S0 state defined in the ACPI (Advanced Configuration and Power Interface) specification. The standby state is a state in which at least some of system functions are limited. For example, the standby state may be the standby state or a sleep state, modern standby in Windows (registered trademark), or a state corresponding to S3 state (sleep state) defined in the ACPI specification. Further, a screen lock state may be included as the standby state. The screen lock is a state in which an image preset to make a content being processed invisible (for example, an image for the screen lock) is displayed on the display unit 14, that is, an unusable state until the lock is released (for example, until the user is authenticated).

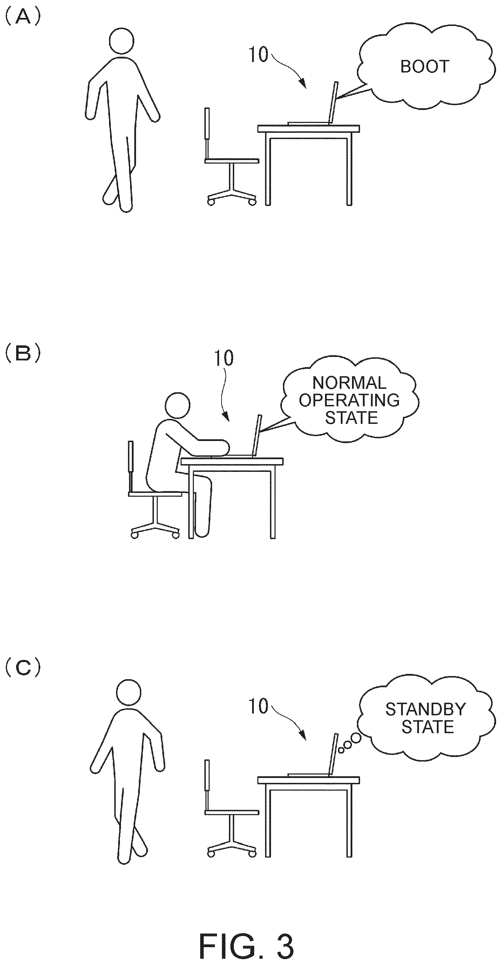

FIG. 3 is a diagram for describing the outline of HPD processing of the information processing apparatus 10 according to the present embodiment. The information processing apparatus 10 detects a person present in front of the information processing apparatus 10 by the HPD processing to control the operating state of the system of the information processing apparatus 10 based on the presence or absence of a person. For example, as illustrated in FIG. 3(A), when detecting a change from a state where no person is present in front of the information processing apparatus 1 (Absence) to a state where a person is present (Presence) in the standby state, that is, when detecting that a person has approached the information processing apparatus 10 (Approach), the information processing apparatus 10 automatically boots the system to make a transition to the normal operating state. Further, when detecting a state where a person is present in front of the information processing apparatus 1 (Presence) in the normal operating state as illustrated in FIG. 3(B), the information processing apparatus 10 continues the normal operating state. Further, as illustrated in FIG. 3(C), when detecting a change from the state where the person is present in front of the information processing apparatus 1 (Presence) to a state where no person is present (Absence) in the normal operating state, that is, when detecting that the person has left the information processing apparatus 10 (Leave), the information processing apparatus 10 causes the system to make a transition to the standby state.

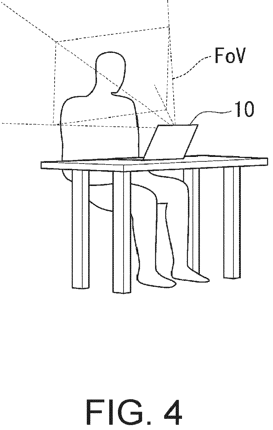

FIG. 4 is a diagram illustrating an example of a person detection range of the information processing apparatus 10 according to the present embodiment. In the illustrated example, a detection range FoV (Field of View: detection viewing angle) in front of the information processing apparatus 10 is a person-detectable range. For example, the information processing apparatus 10 detects an image of a face area with a face captured therein (face image) from a captured image obtained by imaging forward by the camera 27 to determine whether or not a person is present in front of the information processing apparatus 10. The detection range FoV corresponds to an imaging angle of view imaged by the information processing apparatus 10.

Further, when detecting the face image from the captured image, the information processing apparatus 10 may also perform face authentication processing based on facial features and the like. For example, the information processing apparatus 10 can register a face image of the user in advance to determine whether or not the user is present in front of the information processing apparatus 10 by performing the face authentication processing when the face image is detected from the captured image. In other words, since the control of the operating state of the system by the HPD processing described with reference to FIG. 3 does not target any person other than the user for detection, the information processing apparatus 10 can perform control by targeting only the user for detection. For example, even in the case where any person other than the user is present in front of the information processing apparatus 10, the information processing apparatus 10 can cause the system to make the transition to the standby state when the user has left. Processing to control the operating state of the system by this HPD processing is called "HPD operation control processing" (first processing).

Here, a control overview of when the Web conferencing app is running will be described. When the Web conferencing app is running, a display request for prohibiting turning off the display unit 14 is transmitted to the OS. This is to prevent the system from making the transition to the standby state by a sleep timer function or the like of the OS when the Web conferencing app is running. For example, when the Web conference is being conducted, the time of no operation on the information processing apparatus 10 may last. Therefore, since the display request is transmitted from the Web conferencing app to the OS without the need for the user to set the sleep timer function of the OS to disabled, the system can be prevented from making the transition to the standby state. When receiving the display request, the OS maintains the state where the display unit 14 is turned on, and also maintains the display brightness.

Further, when the OS receives the display request, the information processing apparatus 10 also disables the above-described "HPD operation control processing" to prevent the system from automatically making the transition to the standby state. However, since there is a case that the user steps out of the conference while the Web conference is being conducted, the information processing apparatus 10 disables the HPD operation control processing, but performs processing to turn off the display of the display unit 14 or reduce the display brightness when the leave of the user is detected by the HPD processing. Processing to turn off the display of the display unit 14 or reduce the display brightness by this HPD processing is called "HPD display control processing" (second processing).

In the following, the configuration of the information processing apparatus 10 that performs the HPD operation control processing and the HPD display control processing described above will be described in detail.

### [Hardware Configuration of Information Processing Apparatus 10]

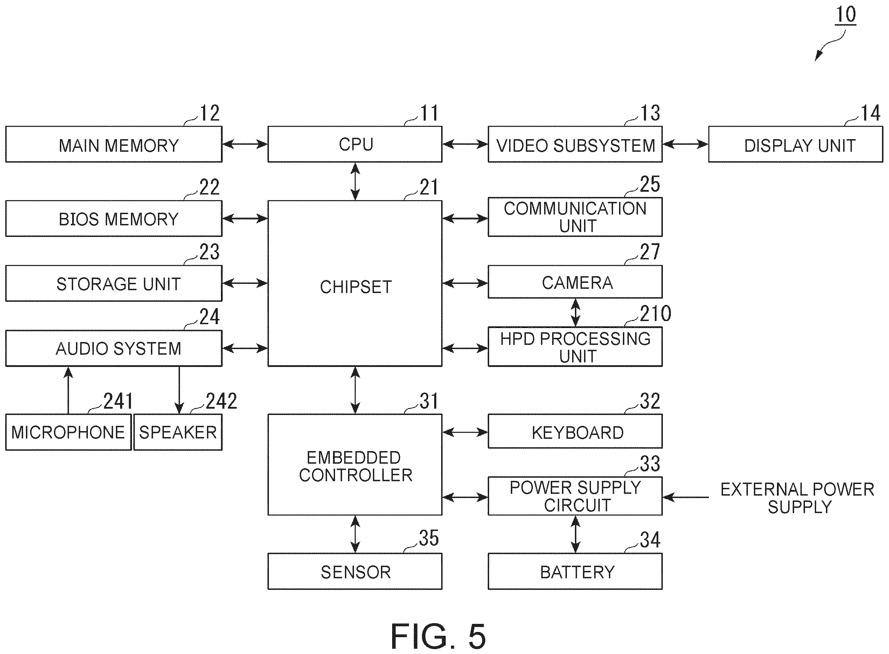

FIG. 5 is a block diagram illustrating an example of the hardware configuration of the information processing apparatus 10 according to the present embodiment. In FIG. 5, components corresponding to respective units in FIG. 2 are given the same reference numerals.

The information processing apparatus 10 includes a CPU 11, a main memory 12, a video subsystem 13, the display unit 14, a chipset 21, a BIOS memory 22, a storage unit 23, an audio system 24, a communication unit 25, the camera 27, an HPD processing unit 210, an embedded controller 31, the keyboard 32, a power supply circuit 33, a battery 34, and a sensor 35.

The CPU 11 executes various kinds of arithmetic processing under the control of a program to control the entire information processing apparatus 10. For example, the CPU 11 executes processing based on the OS (Operating System) program and a BIOS program. Further, the CPU 11 executes processing based on various drivers, various services/utilities, application programs, and the like running on the OS.

The main memory 12 is a writable memory used as reading areas of execution programs of the CPU 11 or working areas to which processing data of the execution programs are written. The main memory 12 is composed, for example, of plural DRAM (Dynamic Random Access Memory) chips. The execution programs include the OS, various drivers for hardware-operating peripheral devices, various services/utilities, application programs, and the like.

The video subsystem 13 is a subsystem for realizing a function related to image display, which includes a video controller. This video controller processes a drawing command from the CPU 11, writes processed drawing information into a video memory, and reads this drawing information from the video memory to output the drawing information to the display unit 14 as drawing data (display data). Further, the video subsystem 13 performs control to control between on and off of the display of the display unit 14 under the control of the CPU 11.

The display unit 14 is, for example, a liquid crystal display or an organic EL display to display a display screen based on the drawing data (display data) output from the video subsystem 13.

The chipset 21 includes controllers such as USB (Universal Serial Bus), serial ATA (AT Attachment), an SPI (Serial Peripheral Interface) bus, a PCI (Peripheral Component Interconnect) bus, a PCI-Express bus, and an LPC (Low Pin Count) bus, and plural devices are connected thereto. For example, the BIOS memory 22, the storage unit 23, the audio system 24, the communication unit 25, the camera 27, the HPD processing unit 210, and the embedded controller 31 are included as the plural devices.

The BIOS memory 22 is configured, for example, by an electrically rewritable nonvolatile memory such as an EEPROM (Electrically Erasable Programmable Read Only Memory) or a flash ROM. For example, the BIOS memory 22 stores system firmware for controlling the BIOS, the embedded controller 31, and the like.

The storage unit 23 is configured to include an HDD (Hard Disk Drive) or an SSD (Solid State Drive), and the like. For example, the storage unit 23 stores the OS, various drivers, various services/utilities, application programs, and various data.

The microphone 241 and the speaker 242 are connected to the audio system 24 to record, play back, and output sound data. For example, the microphone 241 and the speaker 242 are built in the information processing apparatus 10. Note that the microphone 241 and the speaker 242 may also be peripheral devices connected to the information processing apparatus 10 through near-field communication such as Bluetooth (registered trademark) or using the USB.

The communication unit 25 connects to a network such as a wireless LAN (Local Area Network) or a wired LAN to perform data communication. For example, when receiving data from the network, the communication unit 25 generates an event trigger indicating that the data has been received. Further, the communication unit 25 may perform communication with peripheral devices through the near-field communication such as Bluetooth (registered trademark).

The camera 27 is configured to include a lens and an image sensor, which are not illustrated, to capture a subject image input through the lens in order to output image data converted into an electric signal. For example, the camera 27 captures an image of a predetermined range (angle of view) in the direction to face the display unit 14, and outputs image data of the captured image. As an example, when the user is using the Web conferencing app, image data of a captured image of the user present in a position to face the display unit 14 is output. The image data output from the camera 27 is, for example, temporarily stored in the main memory 12, and used in processing of various applications and the like.

The HPD processing unit 210 is configured to include a processor to process the image data of the captured image captured by the camera 27. The HPD processing unit 210 acquires the image data of the captured image captured by the camera 27 and detects a face image from the captured image captured by the camera 27 based on the acquired image data to execute HPD processing for detecting the presence or absence of a person in front of the information processing apparatus 10 (in the detection viewing angle Fov). For example, when detecting the presence or absence of a person in the HPD processing, the HPD processing unit 210 performs face authentication processing based on the detected face image to detect the presence or absence of a specific person (here, the user of the information processing apparatus 10).

Further, based on the detection result by the HPD processing, the HPD processing unit 210 executes HPD operation control processing for controlling the operating state of the system and HPD display control processing for controlling the display of the display unit 14. These processing will be described in detail later.

The keyboard 32 is an input device with multiple keys (an example of operating elements) arranged thereon to accept user operations. As illustrated in FIG. 2, the keyboard 32 is provided on the inner surface of the second chassis 102. The keyboard 32 outputs, to the embedded controller 31, input information (for example, operation signals indicative of operated keys) input by the user operations.

The power supply circuit 33 is configured to include, for example, a DC/DC converter, a charge/discharge unit, an AC/DC adapter, and the like. For example, the power supply circuit 33 converts a DC voltage, supplied from an external power supply such as an AC adapter (not illustrated) or the battery 34, to plural voltages required for operating the information processing apparatus 10. Further, the power supply circuit 33 supplies power to each unit of the information processing apparatus 10 under the control of the embedded controller 31.

The battery 34 is, for example, a lithium battery, which is charged through the power supply circuit 33 when the information processing apparatus 10 is being powered from the external power supply, and outputs the charged power as operating power of the information processing apparatus 10 through the power supply circuit 33 when no power is supplied from the external power supply to the information processing apparatus 10.

The sensor 35 is configured to include various sensors such as a Hall sensor, an acceleration sensor, and a temperature sensor. Each of the various sensors is placed on a target to be detected to output a detection signal. For example, the Hall sensor is used to detect whether the information processing apparatus 10 is in the open state or the closed state. Further, the acceleration sensor is used to detect the orientation and movement of the information processing apparatus 10, the open angle θ between the first chassis 101 and the second chassis 102, and the like. Further, the temperature sensor is used to detect the internal temperature of the information processing apparatus 10.

The embedded controller 31 is a one-chip microcomputer which monitors and controls various devices (peripheral devices, sensors, and the like) regardless of the system state of the information processing apparatus 10. The embedded controller 31 includes a CPU, a ROM, a RAM, multi-channel A/D input terminal and D/A output terminal, a timer, and digital input/output terminals, which are not illustrated. To the digital input/output terminals of the embedded controller 31, for example, the keyboard 32, the power supply circuit 33, the sensor 35, and the like are connected. The embedded controller 31 receives input information (operation signal) from the keyboard 32 and a sensor signal from the sensor 35, and the like. Further, the embedded controller 31 controls the operation of the power supply circuit 33 and the like.

### [Functional Configuration of Information Processing Apparatus]

Next, the functional configuration related to the HPD processing in the information processing apparatus 10 will be described.

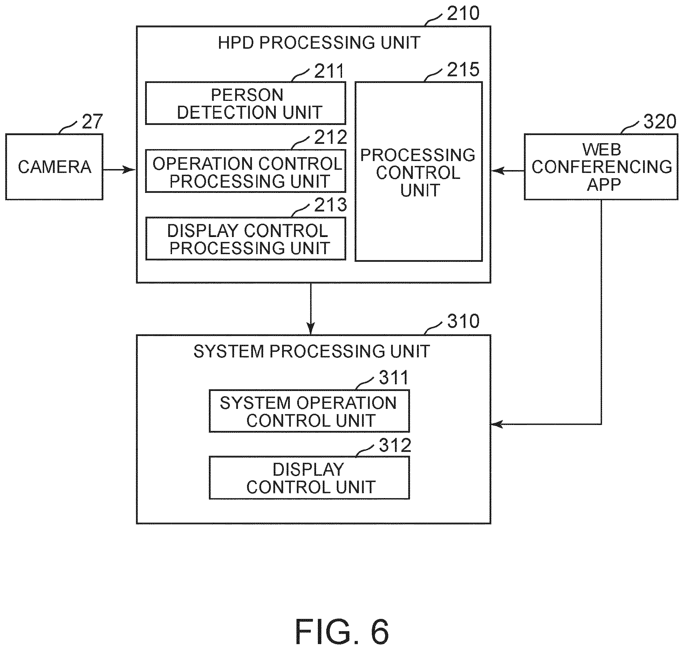

FIG. 6 is a schematic block diagram illustrating an example of the functional configuration of the information processing apparatus 10 according to the present embodiment. In FIG. 6, components corresponding to respective units in FIG. 2 and FIG. 5 are given the same reference numerals. The HPD processing unit 210 includes, as functional components related to the HPD processing, a person detection unit 211, an operation control processing unit 212, a display control processing unit 213, and a processing control unit 215. Further, a system processing unit 310 is a functional component implemented by the CPU 11 executing an OS program, which includes a system operation control unit 311 and a display control unit 312. Further, a Web conferencing app 320 is a functional component implemented by the CPU 11 executing a Web conferencing app on the OS. The Web conferencing app 320 performs the function of the Web conference and transmits a display request to the OS (system processing unit 310) during running.

First, the functional components included in the HPD processing unit 210 will be described. The person detection unit 211 acquires image data of a captured image captured by the camera 27, and detects a face image from the captured image captured by the camera 27 based on the acquired image data to execute HPD processing for detecting the presence or absence of a person in front of the information processing apparatus 10 (in the detection viewing angle Fov). For example, when detecting the presence or absence of a person in the HPD processing, the HPD processing unit 210 performs face authentication processing based on the detected face image to detect the presence or absence of a specific person (here, the user of the information processing apparatus 10).

The operation control processing unit 212 executes HPD operation control processing. Specifically, when it is detected that the user is no longer present in front of the information processing apparatus 10 (that the user has left) based on the detection result by the HPD processing executed by the person detection unit 211, the HPD processing unit 210 gives an instruction to the system processing unit 310 to cause the system to make the transition from the normal operating state to the standby state. Further, after the transition of the system to the standby state, when it is detected that the user is present in front of the information processing apparatus 10 (that the user has approached) based on the detection result by the HPD processing, the HPD processing unit 210 gives an instruction to the system processing unit 310 to boot the system from the standby state.

The display control processing unit 213 executes HPD display control processing. Specifically, when it is detected that the user is no longer present in front of the information processing apparatus 10 (that the user has left) based on the detection result by the HPD processing executed by the person detection unit 211, the display control processing unit 213 gives an instruction to the system processing unit 310 to turn off the display of the display unit 14 or reduce the display brightness. Further, after the display of the display unit 14 is turned off or the display brightness is reduced, when it is detected that the user is present in front of the information processing apparatus 10 (that the user has approached) based on the detection result by the HPD processing, the display control processing unit 213 gives an instruction to the system processing unit 310 to turn on the display of the display unit 14 or return the display brightness to the display brightness before being reduced.

When the OS does not receive the display request, the processing control unit 215 causes the operation control processing unit 212 to execute the HPD operation control processing. Further, when the OS receives the display request, the processing control unit 215 disables the HPD operation control processing by the operation control processing unit 212 not to execute the HPD operation control processing. In other words, the operating state of the system is not change by the HPD processing. Further, even in the case where the OS receives the display request, when the Web conferencing app is running (that is, when receiving the display request from the Web conferencing app), the processing control unit 215 disables the HPD operation control processing, but causes the display control processing unit 213 to execute the HPD display control processing.

Note that the processing control unit 215 may also cause the HPD display control processing to be executed only when the execution of the HPD display control processing is allowed by the user.

Next, the configuration of the system processing unit 310 will be described. The system operation control unit 311 controls the operating state of the system under the control of the HPD processing unit 210. For example, the system operation control unit 311 causes the system to make the transition from the normal operating state to the standby state or to make the transition from the standby state to the normal operating state depending on the instruction from the HPD processing unit 210.

The display control unit 312 performs control to turn on or off the display of the display unit 14 or reduce the display brightness through the video subsystem 13 under the control of the HPD processing unit 210. For example, the display control unit 312 changes the display of the display unit 14 from on to off or from off to on depending on the instruction from the HPD processing unit 210. Further, the display control unit 312 reduces the display brightness of the display unit 14 or returns the display brightness to the display brightness before being reduced depending on the instruction from the HPD processing unit 210.

### [Operation Related to HPD Processing]

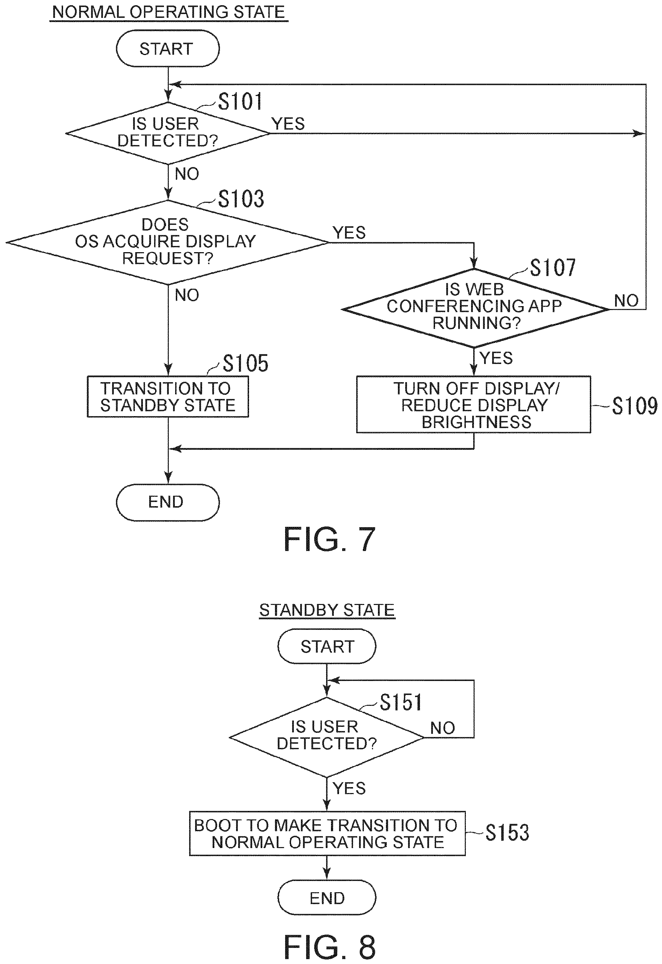

Next, operation related to the HPD processing executed in the information processing apparatus 10 will be described. Referring first to FIG. 7, operation related to HPD processing (HPD operation control processing and HPD display control processing) when the system is in the normal operating state will be described.

FIG. 7 is a flowchart illustrating an example of HPD processing in the normal operating state according to the present embodiment.

(Step S101) The HPD processing unit 210 detects the presence or absence of the user who newly appears in front of the information processing apparatus 10 based on the captured image captured by the camera 27 to determine whether or not the user is detected. When determining that the user is detected (YES), the HPD processing unit 210 performs the process of step S101 again. On the other hand, when determining that the user is not detected (that the user has left) (NO), the HPD processing unit 210 proceeds to a process in step S103.

(Step S103) The HPD processing unit 210 determines whether or not the system processing unit 310 (OS) acquires the display request. When determining that the system processing unit 310 (OS) does not acquire the display request (NO), the HPD processing unit 210 proceeds to a process in step S105. On the other hand, when determining that the system processing unit 310 (OS) acquires the display request (YES), the HPD processing unit 210 proceeds to a process in step S107.

(Step S105) When the OS does not acquire the display request, the HPD processing unit 210 executes the HPD operation control processing to give an instruction to the system processing unit 310 to cause the system to make the transition from the normal operating state to the standby state. The system processing unit 310 causes the system to make the transition from the normal operating state to the standby state based on the instruction from the HPD processing unit 210.

(Step S107) when the OS acquires the display request, the HPD processing unit 210 determines whether or not the Web conferencing app is running. When determining that the Web conferencing app is not running (NO), the HPD processing unit 210 returns to the process in step S101 without performing the HPD operation control processing. On the other hand, when determining that the Web conferencing app is running (YES), the HPD processing unit 210 proceeds to a process in step S109.

(Step S109) Even in the case where the OS acquires the display request, when the Web conferencing app is running, the HPD processing unit 210 executes the HPD display control processing to give an instruction to the system processing unit 310 to turn off the display of the display unit 14 or reduce the display brightness. Based on the instruction from the HPD processing unit 210, the system processing unit 310 turns off the display of the display unit 14 or reduces the display brightness.

Referring next to FIG. 8, operation related to the HPD processing when returning after the system makes the transition to the standby state by the HPD operation control processing in step S105 of FIG. 7 will be described.

FIG. 8 is a flowchart illustrating an example of HPD operation control processing when returning according to the present embodiment.

(Step S151) The HPD processing unit 210 detects the presence or absence of the user who newly appears in front of the information processing apparatus 10 based on the captured image captured by the camera 27 to determine whether or not the user is detected. When determining that the user is not detected (NO), the HPD processing unit 210 performs the process in step S151 again. On the other hand, when determining that the user is detected (that the user has approached) (YES), the HPD processing unit 210 proceeds to a process in step S153.

(Step S153) The HPD processing unit 210 executes the HPD operation control processing to give an instruction to the system processing unit 310 to boot the system from the standby state. The system processing unit 310 boots the system from the standby state to make the transition to the normal operating state based on the instruction from the HPD processing unit 210.

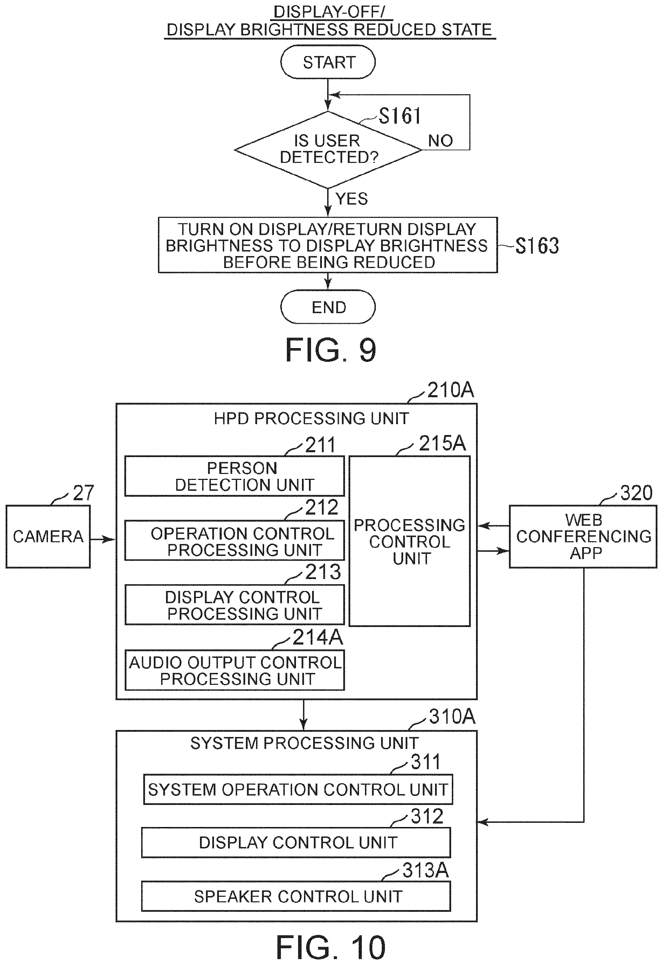

Referring next to FIG. 9, operation related to HPD processing when returning after the display of the display unit 14 is turned off or the display brightness is reduced by the HPD display control processing in step S109 of FIG. 7 will be described.

FIG. 9 is a flowchart illustrating an example of HPD display control processing when returning according to the present embodiment.

(Step S161) The HPD processing unit 210 detects the presence or absence of the user who newly appears in front of the information processing apparatus 10 based on the captured image captured by the camera 27 to determine whether or not the user is detected. When determining that the user is not detected (NO), the HPD processing unit 210 performs the process in step S161 again. On the other hand, when determining that the user is detected (that the user has approached) (YES), the HPD processing unit 210 proceeds to a process in step S163.

(Step S163) The HPD processing unit 210 executes the HPD display control processing to give an instruction to the system processing unit 310 to turn on the display of the display unit 14 or return the display brightness to the display brightness before being reduced. The system processing unit 310 turns on the display of the display unit 14 or returns the display brightness to the display brightness before being reduced based on the instruction from the HPD processing unit 210.

As described above, the information processing apparatus 10 according to the present embodiment includes the main memory 12 (an example of a memory) that temporarily stores image data of a captured image captured by the camera 27 (an example of an imaging unit), the HPD processing unit 210 (an example of a first processor) that processes the image data stored in the main memory 12, and the CPU 11 (an example of a second processor) that executes a program of the system (OS). The HPD processing unit 210 detects a face image from the captured image captured by the camera 27 based on the image data stored in the main memory 12 to perform HPD processing (an example of detection processing) in order to detect the presence or absence of a user. Further, in a case where it is detected that the user is no longer present based on the detection result by the HPD processing, when the CPU 11 (the OS executed on the CPU 11) does not receive a display request (an example of display-off prohibition information) to prohibit the display of the display unit 14 from being turned off, the HPD processing unit 210 performs HPD operation control processing (first processing) to cause the system to make the transition to the standby state, and when the CPU 11 (the OS executed on the CPU 11) receives the display request, the HPD processing unit 210 performs disablement processing to disable the HPD operation control processing. Further, even in the case where the CPU 11 (the OS executed on the CPU 11) receives the display request, when the Web conferencing app (an example of a specific application program) is running by the CPU 11, the HPD processing unit 210 will perform the HPD display control processing (second processing) to turn off the display of the display unit 14 or reduce the display brightness if it is detected that the user is no longer present based on the detection result by the HPD processing.

Thus, when the user (a conference participant) steps out of the conference while the Web conference is being conducted, since the information processing apparatus 10 turns off the display or reduces the display brightness to darken the display, the fact that the Web conference is being conducted and the content of the conference can be prevented from being known to any person other than the user. Therefore, the information processing apparatus 10 can improve the security of the online Web conference.

Further, when it is detected that the user is present based on the detection result by the HPD processing after the display of the display unit 14 is turned off or the display brightness is reduced in the HPD display control processing, the HPD processing unit 210 turns on the display of the display unit 14 or returns the display brightness to the display brightness before being reduced.

Thus, when the user joins the Web conference again after the user steps out of the Web conference and the display is turned off or the display brightness is reduced to darken the display, since the information processing apparatus 10 automatically turns on the display or returns the display brightness to the display brightness before being reduced, it is convenient.

Further, when it is detected that the user is present based on the detection result by the HPD processing after the transition of the system to the standby state in the HPD operation control processing, the HPD processing unit 210 boots the system from the standby state.

Thus, when the user uses the information processing apparatus 10 again after the transition of the system to the standby state due to the fact that the user has left the information processing apparatus 10, since the information processing apparatus 10 automatically boots the system, it is convenient.

Note that the HPD processing unit 210 may also perform the HPD display control processing only when the execution of the HPD display control processing is allowed by the user.

Thus, since control when the user has left the information processing apparatus 10 can be selected by the user, the information processing apparatus 10 is convenient.

Further, a control method for the information processing apparatus 10 according to the present embodiment includes: a detection processing step of causing the HPD processing unit 210 to detect a face image from a captured image captured by the camera 27 based on image data stored in the main memory 12 in order to detect the presence or absence of a user; a first processing step of causing the system to make the transition to the standby state when it is detected that the user is no longer present based on the detection result by the detection processing step; an disablement processing step of disabling HPD operation control processing when the CPU 11 (the OS executed on the CPU 11) receives a display request (the example of the display-off prohibition information) to prohibit the display of the display unit 14 from being turned off; and a second processing step in which, in the case where the CPU 11 (the OS executed on the CPU 11) receives the display request, when the Web conferencing app (the example of the specific application program) is running by the CPU 11, the display of the display unit 14 will be turned off or the display brightness will be reduced if it is detected that the user is no longer present based on the detection result by the HPD processing.

Thus, when the user (a conference participant) is stepped out of the conference while the Web conference is being conducted, since the information processing apparatus 10 turns off the display or reduces the display brightness to darken the display, the fact that the Web conference is being conducted and the content of the conference can be prevented from being known to any person other than the user. Therefore, the information processing apparatus 10 can improve the security of the online Web conference.

### <Second Embodiment>

Next, a second embodiment of the present invention will be described.

In the first embodiment described above, the configuration in which the HPD display control processing (second processing) is executed instead of the HPD operation control processing (first processing) while the Web conferencing app is running is described, but in this embodiment, such a configuration that HPD audio output control processing (third processing) for performing control to turn on and off the speaker 242 by the HPD processing is executed in addition to the HPD display control processing while the Web conferencing app is running will be described.

Note that the configuration of the online conference system 1, and the appearance and the hardware configuration of the information processing apparatus 10 according to the present embodiment are the same as the configurations illustrated in FIG. 1, FIG. 2, and FIG. 5, and the description thereof will be omitted. Here, the functional configuration and processing of the information processing apparatus 10 according to the present embodiment will be described.

FIG. 10 is a schematic block diagram illustrating an example of the functional configuration of the information processing apparatus 10 according to the present embodiment. In FIG. 10, components corresponding to respective units of the functional configuration illustrated in FIG. 6 are given the same reference numerals.

An HPD processing unit 210A includes, as functional components related to HPD processing, the person detection unit 211, the operation control processing unit 212, the display control processing unit 213, an audio output control processing unit 214A, and a processing control unit 215A. The respective units of the person detection unit 211, the operation control processing unit 212, and the display control processing unit 213 are the same functional components as the respective units illustrated in FIG. 6.

The audio output control processing unit 214A executes HPD audio output control processing. Specifically, when it is detected that the user is no longer present in front of the information processing apparatus 10 (that the user has left) based on the detection result by the HPD processing executed by the person detection unit 211, the audio output control processing unit 214A gives a speaker-off (mute) instruction to the system processing unit 310 or the Web conferencing app 320 to prohibit audio output from the speaker 242. Further, when it is detected that the user is present in front of the information processing apparatus 10 (that the user has approached) based on the detection result by the HPD processing after the audio output from the speaker 242 is prohibited, the audio output control processing unit 214A gives a speaker-on (unmute) instruction to the system processing unit 310 or the Web conferencing app 320 to allow the audio output from the speaker 242.

When the OS does not receive the display request, the processing control unit 215A causes the operation control processing unit 212 to execute the HPD operation control processing. On the other hand, when the OS receives the display request, the processing control unit 215A disables the HPD operation control processing by the operation control processing unit 212 not to be executed. In other words, the operating state of the system is not changed by the HPD processing. Further, in the case where the OS receives the display request, when the Web conferencing app is running, the processing control unit 215A disables the HPD operation control processing, but causes the display control processing unit 213 to execute the HPD display control processing and the audio output control processing unit 214A to execute HPD audio output control processing.

A system processing unit 310A is a functional component implemented by the CPU 11 executing the OS program, which includes the system operation control unit 311, the display control unit 312, and a speaker control unit 313A. The respective units of the system operation control unit 311 and the display control unit 312 are the same functional components as the respective units illustrated in FIG. 6.

The speaker control unit 313A performs control between on and off of the speaker 242 (the audio output from the speaker 242) under the control of the HPD processing unit 210. For example, the speaker control unit 313A changes from on to off (mute) or from off (mute) to on (unmute) of the speaker 242 based on the instruction from the HPD processing unit 210.

Note that the control between on and off of the speaker 242 may also be performed by the Web conferencing app 320. For example, the Web conferencing app 320 may change from on to off (mute) or from off (mute) to on (unmute) of the speaker 242 based on the instruction from the HPD processing unit 210.

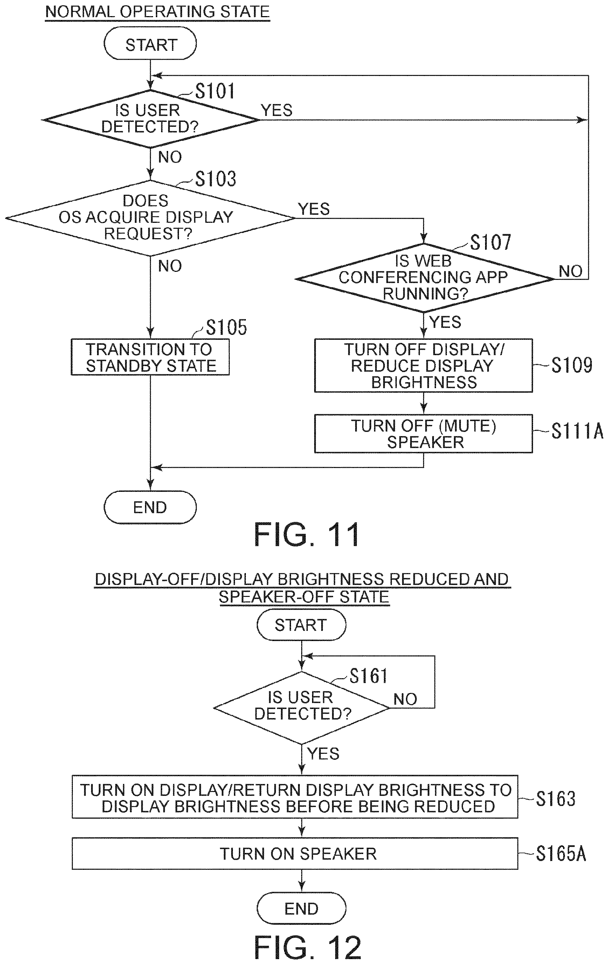

Next, operation related to HPD processing according to the present embodiment will be described. Referring first to FIG. 11, the operation of HPD processing (HPD operation control processing, HPD display control processing, and HPD audio output control processing) when the system is in the normal operating state will be described.

FIG. 11 is a flowchart illustrating an example of HPD processing in the normal operating state according to the present embodiment. Respective processes of steps S101, S103, S105, S107, and S109 in FIG. 11 are the same as the respective processes illustrated in FIG. 7, and the description thereof will be omitted.

(Step S111A) When it is determined in step S107 that the Web conferencing app is running, the HPD processing unit 210 executes HPD audio output control processing to give a speaker-off (mute) instruction to the system processing unit 310 or the Web conferencing app 320 to prohibit audio output from the speaker 242. The system processing unit 310 controls the speaker 242 to be turned off (muted) based on the instruction from the HPD processing unit 210. Note that the Web conferencing app 320 may also control the speaker 242 to be turned off (muted) based on the instruction from the HPD processing unit 210.

Note that the order of the processes of step S109 and step S111A may be changed.

Here, the HPD operation control processing after the transition of the system to the standby state by the HPD operation control processing in step S105 of FIG. 11 is the same as the process illustrated in FIG. 8, and the description thereof will be omitted.

Referring next to FIG. 12, operation related to HPD processing when returning after the process of step S109 (HPD display control processing) and the process of step S111A (HPD audio output control processing) in FIG. 11 are executed will be described.

FIG. 12 is a flowchart illustrating an example of HPD display control processing and HPD audio output control processing when returning according to the present embodiment. Respective processes of step S161 and step S163 in FIG. 12 are the same as the respective processes illustrated in FIG. 9, and the description thereof will be omitted.

(Step S165A) When it is determined in step S161 that the user is detected (that the user has approached), the HPD processing unit 210A executes the HPD audio output control processing to give a speaker-on (unmute) instruction to the system processing unit 310 or the Web conferencing app 320 to allow audio output from the speaker 242. The system processing unit 310 controls the speaker 242 to be turned on (unmuted) based on the instruction from the HPD processing unit 210. Note that the Web conferencing app 320 may also control the speaker 242 to be turned on (unmuted) based on the instruction from the HPD processing unit 210.

Note that the order of the processes of step S163 and step S165A may be changed.

Thus, in the case where the Web conferencing app is running by the CPU 11, when it is detected that the user is no longer present based on the detection result by the HPD processing, the HPD processing unit 210A in the information processing apparatus 10 according to the present embodiment further performs HPD audio output control processing (third processing) to prohibit audio output from the speaker 242.

Thus, when the user (a conference participant) steps out of the conference while the Web conference is being conducted, since the information processing apparatus 10 does not output audio from the speaker 242, the fact that the Web conference is being conducted and the content of the conference can be prevented from being known to any person other than the user. Therefore, the information processing apparatus 10 can improve the security of the online Web conference.

Further, when it is detected that the user is present based on the detection result by the HPD processing after the audio output from the speaker 242 is prohibited in the HPD audio output control processing, the HPD processing unit 210 allows the audio output from the speaker 242.

Thus, when the user who stepped out of the Web conference joins the Web conference again, since audio output from the speaker 242 is automatically allowed, the information processing apparatus 10 is convenient.

### <Third Embodiment>

Next, a third embodiment of the present invention will be described.

In this embodiment, such a configuration that HPD microphone control processing (fourth processing) for performing control to turn on and off the function of the microphone 241 by the HPD processing in addition to the HPD display control processing while the Web conferencing app is running will be described.

Note that the configuration of the online conference system 1, and the appearance and the hardware configuration of the information processing apparatus 10 according to the present embodiment are the same as the configurations illustrated in FIG. 1, FIG. 2, and FIG. 5, and the description thereof will be omitted. Here, the functional configuration and processing of the information processing apparatus 10 according to the present embodiment will be described.

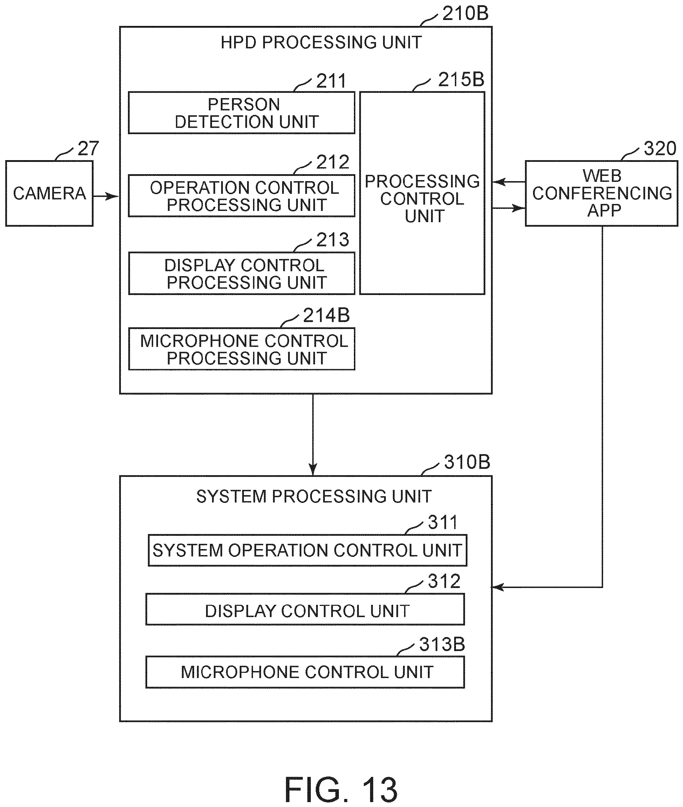

FIG. 13 is a schematic block diagram illustrating an example of the functional configuration of the information processing apparatus 10 according to the present embodiment. In FIG. 13, components corresponding to respective units of the functional configuration illustrated in FIG. 6 are given the same reference numerals.

An HPD processing unit 210B includes, as functional components related to HPD processing, the person detection unit 211, the operation control processing unit 212, the display control processing unit 213, a microphone control processing unit 214B, and a processing control unit 215B. The respective units of the person detection unit 211, the operation control processing unit 212, and the display control processing unit 213 are the same functional components as the respective units illustrated in FIG. 6.

The microphone control processing unit 214B executes HPD microphone control processing. Specifically, when it is detected that the user is no longer present in front of the information processing apparatus 10 (that the user has left) based on the detection result by the HPD processing executed by the person detection unit 211, the microphone control processing unit 214B gives a microphone-off (mute) instruction to the system processing unit 310 or the Web conferencing app 320 to set the function of the microphone 241 to disabled. Further, when it is detected that the user is present in front of the information processing apparatus 10 (that the user has approached) based on the detection result by the HPD processing after the function of the microphone 241 is set to disabled, the microphone control processing unit 214B gives a microphone-on (unmute) instruction to the system processing unit 310B or the Web conferencing app 320 to set the function of the microphone 241 to enabled.

When the OS does not receive the display request, the processing control unit 215B causes the operation control processing unit 212 to execute HPD operation control processing. On the other hand, when the OS receives the display request, the processing control unit 215B disables and does not execute the HPD operation control processing by the operation control processing unit 212. Further, even in the case where the OS receives the display request, when the Web conferencing app is running, the processing control unit 215B disables the HPD operation control processing, but causes the display control processing unit 213 to execute HPD display control processing and causes the microphone control processing unit 214B to execute HPD microphone control processing.

A system processing unit 310B is a functional component implemented by the CPU 11 executing the OS program, which includes the system operation control unit 311, the display control unit 312, and a microphone control unit 313B. The respective units of the system operation control unit 311 and the display control unit 312 are the same functional components as the respective units illustrated in FIG. 6.

The microphone control unit 313B performs control between the on and off of the microphone 241 (between enabling and disabling the function of the microphone 241) under the control of the HPD processing unit 210B. For example, the microphone control unit 313B changes from on to off (mute) or from off (mute) to on (unmute) of the microphone 241 based on the instruction from the HPD processing unit 210B.

Note that the control between on and off of the microphone 241 may also be performed by the Web conferencing app 320. For example, the Web conferencing app 320 may change from on to off (mute) or from off (mute) to on (unmute) of the microphone 241 based on the instruction from the HPD processing unit 210B.

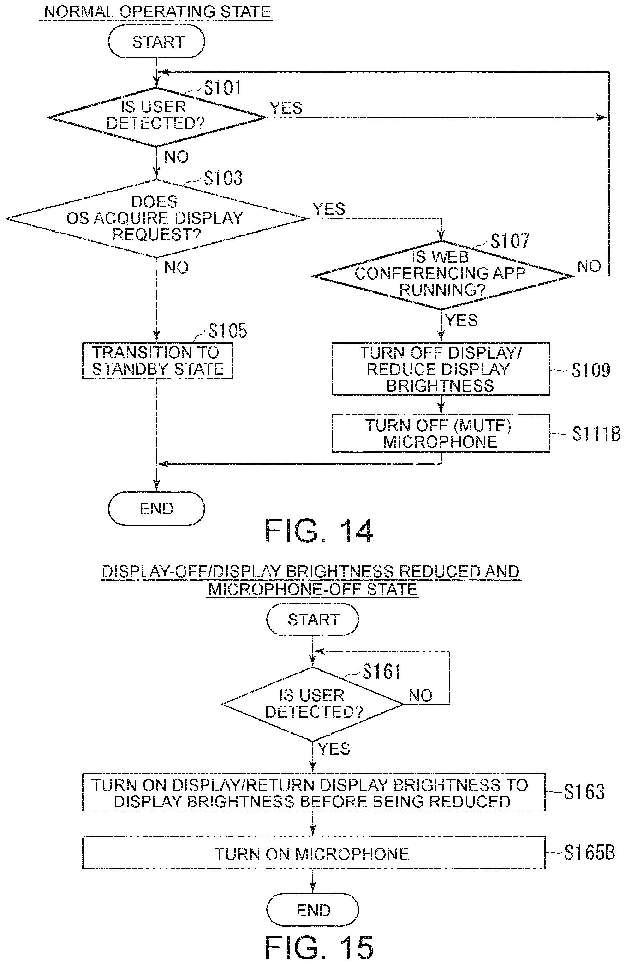

Next, operation related to HPD processing according to the present embodiment will be described. Referring first to FIG. 14, operation related to HPD processing (HPD operation control processing, HPD display control processing, and HPD microphone control processing) when the system is in the normal operating state will be described.

FIG. 14 is a flowchart illustrating an example of HPD processing in the normal operating state according to the present embodiment. Respective processes of steps S101, S103, S105, S107, and S109 in FIG. 14 are the same as the respective processes illustrated in FIG. 7, and the description thereof will be omitted.

(Step S111B) When it is determined in step S107 that the Web conferencing app is running, the HPD processing unit 210B executes the HPD microphone control processing to give a microphone-off (mute) instruction to the system processing unit 310B or the Web conferencing app 320 to set the function of the microphone 241 to disabled. The system processing unit 310B controls the microphone 241 to be turned off (muted) based on the instruction from the HPD processing unit 210. Note that the Web conferencing app 320 may also control the microphone 241 to be turned off (muted) based on the instruction from the HPD processing unit 210.

Note that the order of the processes of step S109 and step S111B may be changed.

Here, the HPD operation control processing after the transition of the system to the standby state by the HPD operation control processing in step S105 of FIG. 14 is the same as the process illustrated in FIG. 8, and the description thereof will be omitted.

Referring next to FIG. 15, operation related to HPD processing when returning after the processes of step S109 (HPD display control processing) and step S111B (HPD microphone control processing) in FIG. 14 are executed will be described.

FIG. 15 is a flowchart illustrating an example of HPD display control processing and HPD microphone control processing when returning according to the present embodiment. Respective processes of step S161 and step S163 in FIG. 15 are the same as the respective processes illustrated in FIG. 9, and the description thereof will be omitted.

(Step S165B) When it is determined in step S161 that the user is detected (that the user has approached), the HPD processing unit 210B executes the HPD microphone control processing to give a microphone-on (unmute) instruction to the system processing unit 310B or the Web conferencing app 320 to set the function of the microphone 241 to enabled. The system processing unit 310B controls the microphone 241 to be turned on (unmuted) based on the instruction from the HPD processing unit 210B. Note that the Web conferencing app 320 may also control the microphone 241 to be turned on (unmuted) based on the instruction from the HPD processing unit 210B.

Note that the order of the processes of step S163 and step S165B may be changed.

Thus, while the Web conferencing app is running by the CPU 11, when it is detected that the user is no longer present based on the detection result by the HPD processing, the HPD processing unit 210B in the information processing apparatus 10 according to the present embodiment further performs HPD microphone control processing (fourth processing) to set the function of the microphone 241 to disabled.

Thus, when the user (a conference participant) steps out of the conference while the Web conference is being conducted, since the information processing apparatus 10 disables the function of the microphone 241, the content of conversations around the information processing apparatus 10 after the user steps out of the conference can be prevented from being leaked out to other users participating in the Web conference. Therefore, the information processing apparatus 10 can improve the security of the online Web conference.

Further, when it is detected that the user is present based on the detection result by the HPD processing after the function of the microphone 241 is set to disabled in the HPD microphone control processing, the HPD processing unit 210B sets the function of the microphone 241 to enabled.

Thus, when the user who stepped out of the Web conference joins the Web conference again, since the function of the microphone 241 is automatically enabled, the information processing apparatus 10 is convenient.

### <Fourth Embodiment>

Next, a fourth embodiment of the present invention will be described.

In this embodiment, such a configuration that HPD camera control processing (fifth processing) for controlling whether or not to transmit a captured image captured by the camera 27 by the HPD processing in addition to the HPD display control processing while the Web conferencing app is running will be described.

Note that the configuration of the online conference system 1, and the appearance and the hardware configuration of the information processing apparatus 10 according to the present embodiment are the same as the configurations illustrated in FIG. 1, FIG. 2, and FIG. 5, and the description thereof will be omitted. Here, the functional configuration and processing of the information processing apparatus 10 according to the present embodiment will be described.

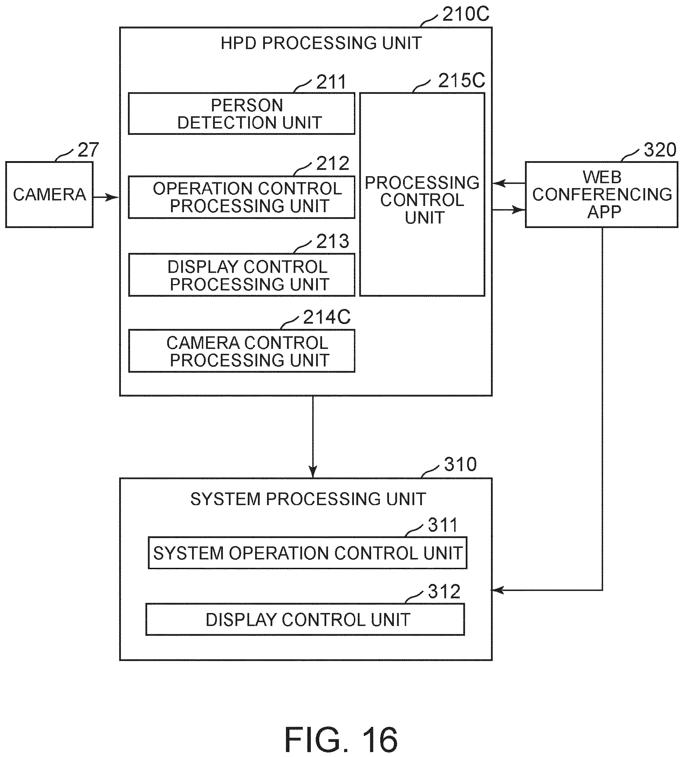

FIG. 16 is a schematic block diagram illustrating an example of the functional configuration of the information processing apparatus 10 according to the present embodiment. In FIG. 16, components corresponding to the respective units of the functional components illustrated in FIG. 6 are given the same reference numerals.

An HPD processing unit 210C includes, as functional components related to HPD processing, the person detection unit 211, the operation control processing unit 212, the display control processing unit 213, a camera control processing unit 214C, and a processing control unit 215C. The respective units of the person detection unit 211, the operation control processing unit 212, and the display control processing unit 213 are the same functional components as the respective units illustrated in FIG. 6.

The camera control processing unit 214C executes HPD camera control processing. Specifically, when it is detected that the user is no longer present in front of the information processing apparatus 10 (that the user has left) based on the detection result by the HPD processing executed by the person detection unit 211, the camera control processing unit 214C gives a camera-off instruction to the Web conferencing app 320 to set the transmission of a captured image captured by the camera 27 to stopped. Further, when it is detected that the user is present in front of the information processing apparatus 10 (that the user has approached) based on the detection result by the HPD processing after the transmission of the captured image captured by the camera 27 is stopped, the camera control processing unit 214C gives a camera-on instruction to the Web conferencing app 320 to resume the transmission of the captured image captured by the camera 27.

When the OS does not receive the display request, the processing control unit 215C causes the operation control processing unit 212 to execute HPD operation control processing. On the other hand, when the OS receives the display request, the processing control unit 215C disables and does not execute the HPD operation control processing by the operation control processing unit 212. In other words, the operating state of the system is not changed by the HPD processing. Further, even in the case where the OS receives the display request, when the Web conferencing app is running, the processing control unit 215C disables the HPD operation control processing, but causes the display control processing unit 213 to execute HPD display control processing and causes the camera control processing unit 214C to execute HPD camera control processing.

The Web conferencing app 320 performs control between on and off of the camera on the Web conferencing app under the control of the HPD processing unit 210C. For example, this control between on and off of the camera on the Web conferencing app is to control whether or not a captured image captured by the camera 27 is transmitted to other information processing apparatuses 10 of participants who are participating in the online conference, which is not control the imaging function of the camera 27 itself. For example, the Web conferencing app 320 changes from on to off or from off to on of the camera based on the instruction from the HPD processing unit 210C.

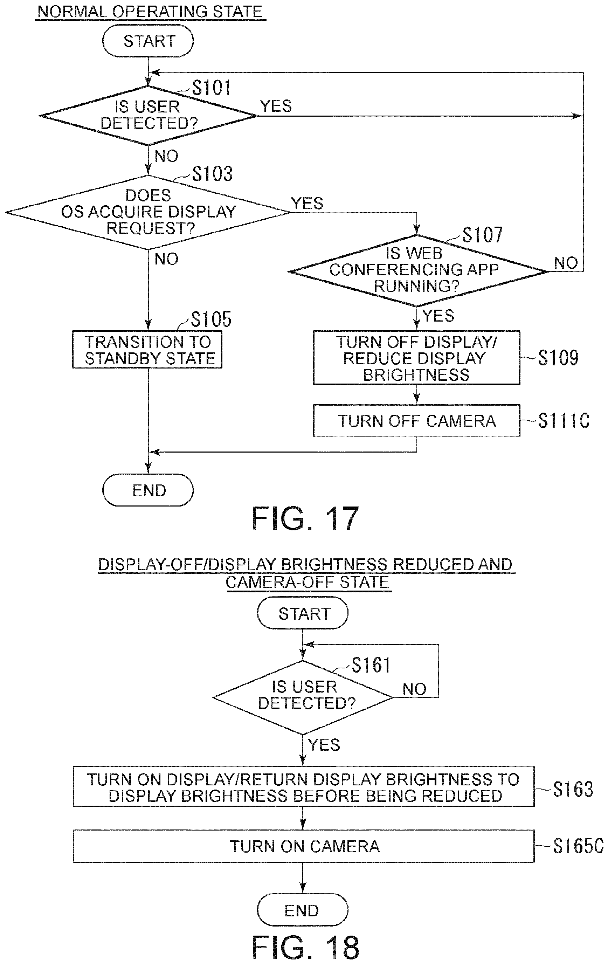

Next, operation related to HPD processing according to the present embodiment will be described. Referring first to FIG. 17, operation related to HPD processing (HPD operation control processing, HPD display control processing, and HPD camera control processing) when the system is in the normal operating state will be described.

FIG. 17 is a flowchart illustrating an example of HPD processing in the normal operating state according to the present embodiment. Respective processes of steps S101, S103, S105, S107, and S109 in FIG. 17 are the same as the respective processes illustrated in FIG. 7, and the description thereof will be omitted.

(Step S111C) When it is determined in step S107 that the Web conferencing app is running, the HPD processing unit 210C executes HPD camera control processing to give a camera-off instruction to the Web conferencing app 320 to set the transmission of a captured image captured by the camera 27 to stopped. The Web conferencing app 320 controls the camera on the Web conferencing app to be turned off based on the instruction from the HPD processing unit 210C.

Note that the order of the processes of step S109 and step S111C may be changed.

Here, the HPD operation control processing after the transition of the system to the standby state by the HPD operation control processing in step S105 of FIG. 17 is the same as the process illustrated in FIG. 8, and the description thereof will be omitted.

Referring next to FIG. 18, operation related to HPD processing when returning after the processes of step S109 (HPD display control processing) and step S111C (HPD camera control processing) in FIG. 17 are executed will be described.

FIG. 18 is a flowchart illustrating an example of HPD display control processing and HPD camera control processing when returning according to the present embodiment. Respective processes of step S161 and step S163 in FIG. 18 are the same as the respective processes illustrated in FIG. 9, and the description thereof will be omitted.

(Step S165C) When it is determined in step S161 that the user is detected (that the user has approached), the HPD processing unit 210C executes HPD camera control processing to give a camera-on instruction to the Web conferencing app 320 to resume the transmission of a captured image captured by the camera 27. The Web conferencing app 320 controls the camera on the Web conferencing app to be turned on based on the instruction from the HPD processing unit 210C.

Note that the order of the processes of step S163 and step S165C may be changed.

Thus, the Web conferencing app conducts the online Web conference using the imaging function of the camera 27 in the online conference system 1 according to the present embodiment. The information processing apparatus 10 includes the communication unit 25 to transmit a captured image captured by the camera 27 to respective information processing apparatuses 10 (an example of terminals) of one or more participants participating in the Web conference through the network NW. In the case where the Web conferencing app is running by the CPU 11, when it is detected that the user is no longer present based on the detection result by the HPD processing, the HPD processing unit 210C further performs HPD camera control processing (fifth processing) to set the transmission of a captured image captured by the camera 27 to stopped.

Thus, when the user (a conference participant) is stepped out of the conference while the Web conference is being conducted, since the captured image captured by the camera 27 is made invisible to other users who are participating in the Web conference, the information processing apparatus 10 can prevent any person other than the user from being captured. Therefore, the information processing apparatus 10 can improve the security of the online Web conference.

Further, when it is detected that the user is present based on the detection result by the HPD processing after the transmission of the captured image is set to stopped in the HPD camera control processing, the HPD processing unit 210C resumes the transmission of the captured image captured by the camera 27.

Thus, when the user who stepped out of the Web conference joins the Web conference again, since the transmission of the captured image captured by the camera 27 is automatically resumed, the information processing apparatus 10 is convenient.

Note that when the camera on the Web conferencing app is turned off to stop the transmission of the captured image captured by the camera 27, the information processing apparatus 10 may also transmit, to other information processing apparatuses 10 of participants in the online conference, a preset image instead of the captured image captured by the camera 27. The preset image is, for example, a still image arbitrarily set by the user, a repeated video (looping video), or the like. The still image or the video may be an image captured by the user, an image registered on the Web conferencing app in advance, or an image downloaded through the network NW. Further, in the case of the video, it may be a video of the user captured in advance by the user himself or herself while participating in the Web conference.

For example, in the case where the Web conferencing app is running by the CPU 11, when it is detected that the user is no longer present based on the detection result by the HPD processing, the HPD processing unit 210C may further perform processing (sixth processing) to give an instruction to the Web conferencing app to transmit the preset image instead of the captured image by the camera 27 in the HPD camera control processing.

Thus, when the user (a conference participant) steps out of the conference while the Web conference is being conducted, since the captured image captured by the camera 27 is made invisible to other users who are participating in the Web conference, the information processing apparatus 10 can prevent any person other than the user from being captured. Therefore, the information processing apparatus 10 can improve the security of the online Web conference.

Further, in the above sixth processing, when it is detected that the user is present based on the detection result by the HPD processing after the Web conferencing app is instructed to transmit the preset image instead of the captured image by the camera 27, the HPD processing unit 210C gives an instruction to the Web conferencing app to transmit the captured image by the camera 27.

Thus, when the user who stepped out of the Web conference joins the Web conference again, since the transmission of the captured image captured by the camera 27 is automatically resumed, the information processing apparatus 10 is convenient.

### <Fifth Embodiment>

Next, a fifth embodiment of the present invention will be described.

In this embodiment, such a configuration that HPD pending-state control processing (seventh processing) for controlling that participating in the Web conference is in a pending state by the HPD processing in addition to the HPD display control processing while the Web conferencing app is running will be described.

Note that the configuration of the online conference system 1, and the appearance and the hardware configuration of the information processing apparatus 10 according to the present embodiment are the same as the configurations illustrated in FIG. 1, FIG. 2, and FIG. 5, and the description thereof will be omitted. Here, the functional configuration and processing of the information processing apparatus 10 according to the present embodiment will be described.

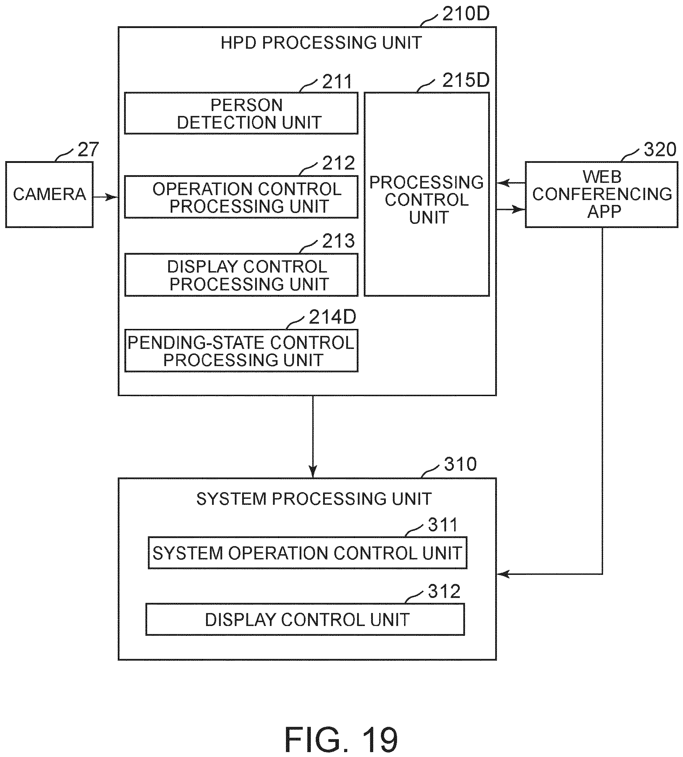

FIG. 19 is a schematic block diagram illustrating an example of the functional configuration of the information processing apparatus 10 according to the present embodiment. In FIG. 19, components corresponding to the respective units of the functional components illustrated in FIG. 6 are given the same reference numerals.

An HPD processing unit 210D includes, as functional components related to HPD processing, the person detection unit 211, the operation control processing unit 212, the display control processing unit 213, a pending-state control processing unit 214D, and a processing control unit 215D. The respective units of the person detection unit 211, the operation control processing unit 212, and the display control processing unit 213 are the same functional components as the respective units illustrated in FIG. 6.

The pending-state control processing unit 214D executes HPD pending-state control processing. Specifically, when it is detected that the user is no longer present in front of the information processing apparatus 10 (that the user has left) based on the detection result by the HPD processing executed by the person detection unit 211, the pending-state control processing unit 214D gives an instruction to the Web conferencing app 320 to set that participating in the Web conference is in the pending state in the function of the Web conferencing app. Further, when it is detected that the user is present in front of the information processing apparatus 10 (that the user has approached) based on the detection result by the HPD processing after participating in the Web conference is set to be in the pending state, the pending-state control processing unit 214D gives an instruction to the Web conferencing app 320 to set the pending state to be released.

When the OS does not receive the display request, the processing control unit 215D causes the operation control processing unit 212 to execute HPD operation control processing. On the other hand, when the OS receives the display request, the processing control unit 215D disables and does not execute the HPD operation control processing by the operation control processing unit 212. In other words, the operating state of the system is not changed by the HPD processing. Further, even in the case where the OS receives the display request, when the Web conferencing app is running, the processing control unit 215D disables the HPD operation control processing, but causes the display control processing unit 213 to execute HPD display control processing and the pending-state control processing unit 214D to execute the HPD pending-state control processing.

The Web conferencing app 320 controls the participating state of the user in the Web conference under the control of the HPD processing unit 210. For example, the Web conferencing app 320 changes from the participating state in the Web conference to the pending state or releases the pending state to change to the participating state based on the instruction from the HPD processing unit 210.

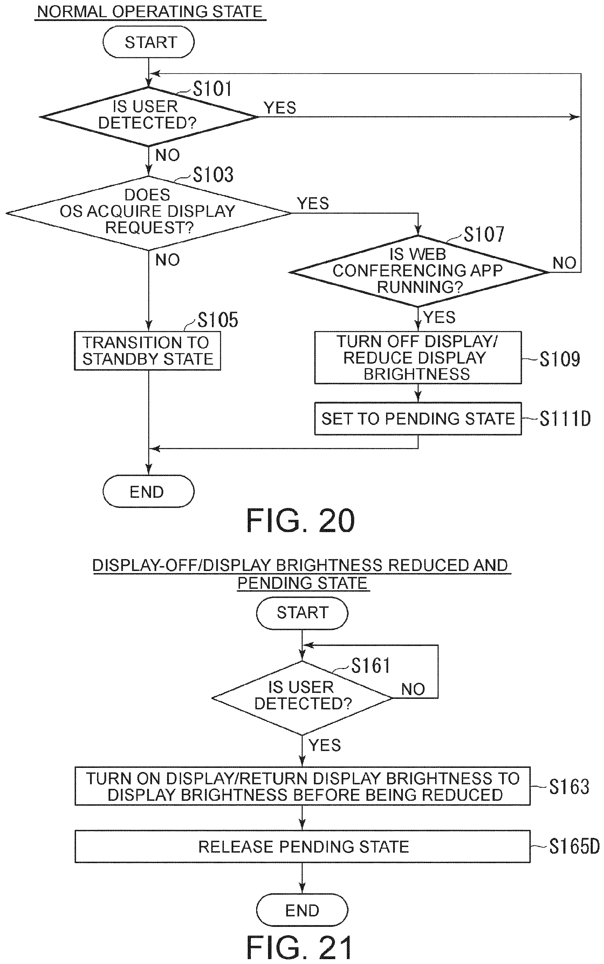

Next, operation related to HPD processing according to the present embodiment will be described. Referring first to FIG. 20, operation related to HPD processing (HPD operation control processing, HPD display control processing, and HPD pending-state control processing) when the system is in the normal operating state will be described.

FIG. 20 is a flowchart illustrating an example of HPD processing in the normal operating state according to the present embodiment. Respective processes of steps S101, S103, S105, S107, and S109 in FIG. 20 are the same as the respective processes illustrated in FIG. 7, and the description thereof will be omitted.

(Step S111D) When it is determined in step S107 that the Web conferencing app is running, the HPD processing unit 210D executes the HPD pending-state control processing to give an instruction to the Web conferencing app 320 to set participating in the Web conference to be in the pending state in the function of the Web conferencing app. The Web conferencing app 320 controls participating in the Web conference to be in the pending state based on the instruction from the HPD processing unit 210D.

Note that the order of the processes of step S109 and step S111D may be changed.

Here, the HPD operation control processing after the transition of the system to the standby state by the HPD operation control processing in step S105 of FIG. 20 is the same as the process illustrated in FIG. 8, and the description thereof will be omitted.

Referring next to FIG. 21, operation related to HPD processing when returning after the processes of step S109 (HPD display control processing) and step S111D (HPD pending-state control processing) in FIG. 20 are executed will be described.

FIG. 21 is a flowchart illustrating an example of HPD display control processing and HPD pending-state control processing when returning according to the present embodiment. Respective processes of step S161 and step S163 in FIG. 21 are the same as the respective processes illustrated in FIG. 9, and the description thereof will be omitted.

(Step S165D) When it is determined in step S161 that the user is detected (that the user has approached), the HPD processing unit 210D executes HPD pending-state control processing to give an instruction to the Web conferencing app 320 to make a setting to release the pending state. The Web conferencing app 320 performs control to release the pending state so that the user will be in a state of participating in the Web conference based on the instruction from the HPD processing unit 210D.

Note that the order of the processes of step S163 and step S165D may be changed.

Thus, the Web conferencing app conducts the online Web conference using the imaging function of the camera 27 in the online conference system 1 according to the present embodiment. The information processing apparatus 10 includes the communication unit 25 to transmit a captured image captured by the camera 27 to respective information processing apparatuses 10 (the example of terminals) of one or more participants participating in the Web conference through the network NW. While the Web conferencing app is running by the CPU 11, when it is detected that the user is no longer present based on the detection result by the HPD processing, the HPD processing unit 210D further performs HPD pending-state control processing (seventh processing) to set participating in the Web conference to be in the pending state in the function of the Web conferencing app.

Thus, when the user (a conference participant) is stepped out of the conference while the Web conference is being conducted, since other users participating in the Web conference can recognize that the user stepped out of the conference, the information processing apparatus 10 is convenient.

Further, when it is detected that the user is present based on the detection result by the HPD processing after participating in the Web conference is set to be in the pending state in the HPD pending-state control processing, the HPD processing unit 210D makes a setting to release the pending state.

Thus, when the user who stepped out of the Web conference joins the Web conference again, since the pending state is automatically released and other users participating in the Web conference can recognized, the information processing apparatus 10 is convenient.

While the respective embodiments of this invention have been described in detail above with reference to the accompanying drawings, specific configurations are not limited to those in the embodiments described above, and design changes are also included without departing from the scope of this invention. For example, the respective components described in the respective embodiments described above can be combined arbitrarily. For example, when the Web conferencing app is running by the CPU 11, the information processing apparatus 10 may also perform two or more processing in addition to the HPD display control processing without being limited to any of processing among the HPD audio output control processing, the HPD microphone control processing, the HPD camera control processing, and the HPD pending-state control processing if it is detected that the user is no longer present based on the detection result by the HPD processing.

Further, the example in which the Web conference is conducted by executing the Web conferencing app in the online conference system 1 is described in the above embodiments, but the app is not limited to the Web conferencing app, and any other video conferencing app can also be applied. Here, the video conferencing app means a unified communication tool capable of transmitting and receiving at least video and audio.

Further, the example in which, when detecting the presence or absence of a person in the HPD processing, the HPD processing unit 210 detects the presence or absence of a user (the example of the specific person) of the information processing apparatus 10 based on a face image detected from a captured image is described in the above embodiments.

Thus, the information processing apparatus 10 can detect the user by distinguishing the user from any person other than the user. For example, even when a person is detected in front of the information processing apparatus 10, if the person is not the user, the information processing apparatus 10 can detect that the user has left, and based on the detection result, the information processing apparatus 10 can execute the HPD operation control processing, the HPD display control processing, the HPD audio output control processing, the HPD microphone control processing, the HPD camera control processing, the HPD pending-state control processing, and the like.

Note that the HPD processing unit 210 may simply detect the presence or absence of a person, rather than the user (the specific person) in the HPD processing. In other words, based on the detection result of detecting the presence or absence of a person without being limited to the user (the specific person), the HPD processing unit 210 may also execute the HPD operation control processing, the HPD display control processing, the HPD audio output control processing, the HPD microphone control processing, the HPD camera control processing, the HPD pending-state control processing, and the like.

Note that the information processing apparatus 10 described above has a computer system therein. Then, a program for implementing the function of each component included in the information processing apparatus 10 described above may be recorded on a computer-readable recording medium so that the program recorded on this recording medium is read into the computer system and executed to perform processing in each component included in the information processing apparatus 10 described above. Here, the fact that "the program recorded on the recording medium is read into the computer system and executed" includes installing the program on the computer system. It is assumed that the "computer system" here includes the OS and hardware such as peripheral devices and the like. Further, the "computer system" may also include two or more computers connected through networks including the Internet, WAN, LAN, and a communication line such as a dedicated line. Further, the "computer-readable recording medium" means a storage medium such as a flexible disk, a magneto-optical disk, a portable medium like a flash ROM or a CD-ROM, or a hard disk incorporated in the computer system. The recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the information processing apparatus 10, or delivery servers for delivering respective divided pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions of the information processing apparatus 10 in the embodiments described above may be realized as an integrated circuit such as LSI (Large Scale Integration). Each function may be implemented by a processor individually, or some or all of the functions may be integrated as a processor. Further, the method of circuit integration is not limited to LSI, and it may be realized by a dedicated circuit or a generalpurpose processor. Further, if integrated circuit technology replacing the LSI appears with the progress of semiconductor technology, an integrated circuit according to the technology may be used.

### Description of Symbols

- 1: online conference system
- 10: information processing apparatus
- 101: first chassis
- 102: second chassis
- 103: hinge mechanism
- 11: CPU
- 12: main memory
- 13: video subsystem
- 14: display unit
- 21: chipset
- 22: BIOS memory
- 23: storage unit
- 24: audio system
- 25: communication unit
- 27: camera
- 31: embedded controller
- 32: keyboard
- 33: power supply circuit
- 34: battery
- 35: sensor
- 210, 210A, 210B, 210C, 210D: HPD processing unit
- 211: person detection unit
- 212: operation control processing unit
- 213: display control processing unit
- 214A: audio output control processing unit
- 214B: microphone control processing unit
- 214C: camera control processing unit
- 214D: pending-state control processing unit
- 215, 215A, 215B, 215C, 215D: processing control unit
- 241: microphone
- 242: speaker
- 310: system processing unit
- 311: system operation control unit
- 312: display control unit
- 313A: speaker control unit
- 313B: microphone control unit

## Claims

1. An information processing apparatus comprising:
a memory arranged to temporarily store image data of a captured image captured by an imaging unit;
a first processor arranged to process the image data stored in the memory; and
a second processor arranged to execute a program of a system, wherein the first processor is further arranged to perform:
detection processing to detect a face image from the captured image captured by the imaging unit based on the image data stored in the memory in order to detect presence of absence of a person,
first processing to cause the system to make a transition to a standby state when it is detected that the person is no longer present based on the detection result by the detection processing,
disablement processing to disable the first processing when the second processor receives display-off prohibition information to prohibit display of a display unit from being turned off, and
second processing to turn off the display of the display unit or reduce display brightness when it is detected that the person is no longer present based on the detection result by the detection processing while a specific application program is running by the second processor even in a case where the second processor receives the display-off prohibition information.

2. The information processing apparatus according to claim 1, wherein the first processor is further arranged to detect presence or absence of a specific person based on the face image when detecting the presence or absence of the person in the detection processing.

3. The information processing apparatus according to claim 1, wherein upon detection that the person is present based on the detection result by the detection processing after the display of the display unit is turned off or the display brightness is reduced in the second processing, the first processor is further arranged to turn on the display of the display unit or returns the display brightness to brightness before being reduced.

4. The information processing apparatus according to claim 1, wherein upon detection that the person is present based on the detection result by the detection processing after the transition of the system to the standby state in the first processing, the first processor is further arranged to boot the system from the standby state.

5. The information processing apparatus according to any one of claims 1 to 4, wherein the first processor is further arranged to perform the second processing only when execution of the second processing is allowed by a user.

6. The information processing apparatus according to claim 1, wherein when the specific application program is running by the second processor, the first processor is further arranged to perform third processing to prohibit audio output from a speaker if it is detected that the person is no longer present based on the detection result by the detection processing.

7. The information processing apparatus according to claim 6, upon detection that the person is present based on the detection result by the detection processing after the audio output from the speaker is prohibited in the third processing, the first processor is further arranged to allow the audio output from the speaker.

8. The information processing apparatus according to claim 1, wherein when the specific application program is running by the second processor, the first processor is further arranged to perform fourth processing to set a function of a microphone to disabled if it is detected that the person is no longer present based on the detection result by the detection processing.

9. The information processing apparatus according to claim 8, upon detection that the person is present based on the detection result by the detection processing after the function of the microphone is set to disabled in the fourth processing, the first processor is further arranged to set the function of the microphone to enabled.

10. The information processing apparatus according to claim 1, wherein
the specific application is an application to conduct an online video conference using an imaging function by the imaging unit,
the information processing apparatus further comprises a communication unit which transmits a captured image captured by the imaging unit to respective terminals of one or more participants who join the video conference through a network, and
when the specific application program is running by the second processor, the first processor is further arranged to perform fifth processing to set transmission of the captured image captured by the imaging unit to stopped if it is detected that the person is no longer present based on the detection result by the detection processing.

11. The information processing apparatus according to claim 10, wherein upon detection that the person is present based on the detection result by the detection processing after the transmission of the captured image is set to stopped in the fifth processing, the first processor is further arranged to resume the transmission of the captured image captured by the imaging unit.

12. The information processing apparatus according to claim 1, wherein
the specific application is an application to conduct an online video conference using an imaging function by the imaging unit,
the information processing apparatus further comprises a communication unit which transmits a captured image captured by the imaging unit to respective terminals of one or more participants who join the video conference through a network, and
when the specific application program is running by the second processor, the first processor is further arranged to perform sixth processing to set a preset image to be transmitted instead of the captured image by the imaging unit if it is detected that the person is no longer present based on the detection result by the detection processing.

13. The information processing apparatus according to claim 12, wherein when it is detected that the person is present based on the detection result by the detection processing after the preset image is set to be transmitted instead of the captured image by the imaging unit in the sixth processing, the first processor sets the captured image by the imaging unit to be transmitted.

14. The information processing apparatus according to claim 1, wherein
the specific application is an application to conduct an online video conference,
the information processing apparatus further comprises a communication unit which communicates with respective terminals of one or more participants who join the video conference through a network, and
when the specific application program is running by the second processor, the first processor is further arranged to perform seventh processing to set participating in the video conference to be in a pending state in a function of the specific application if it is detected that the person is no longer present based on the detection result by the detection processing, and optionally
when it is detected that the person is present based on the detection result by the detection processing after participating in the video conference is set to be in the pending state in the seventh processing, the first processor sets the pending state to be released.

15. A control method for an information processing apparatus including: a memory which temporarily stores image data of a captured image captured by an imaging unit; a first processor which processes the image data stored in the memory; and a second processor which executes a program of a system, the control method comprising:
a detection processing step of causing the first processor to detect a face image from the captured image captured by the imaging unit based on the image data stored in the memory in order to detect presence of absence of a person;
a first processing step of causing the system to make a transition to a standby state when it is detected that the person is no longer present based on the detection result by the detection processing step;
a disablement processing step of disabling processing by the first processing step when the second processor receives display-off prohibition information to prohibit display of a display unit from being turned off; and
a second processing step of turning off the display of the display unit or reducing display brightness when it is detected that the person is no longer present based on the detection result by the detection processing step while a specific application program is running by the second processor even in a case where the second processor receives the display-off prohibition information.
